(19) Europäisches Patentamt
European Patent Office
Office européen des brevets

(11) **EP 1 813 057 B1**

(12) **EUROPEAN PATENT SPECIFICATION**

(45) Date of publication and mention
of the grant of the patent:
**24.02.2010 Bulletin 2010/08**

(51) Int Cl.:
***H04L 12/10*** *(2006.01)*

(21) Application number: **05815960.9**

(22) Date of filing: **20.10.2005**

(86) International application number:
**PCT/US2005/037826**

(87) International publication number:
**WO 2006/055170 (26.05.2006 Gazette 2006/21)**

(54) **ANALOG POWER MANAGEMENT WITHIN POWER OVER ETHERNET SYSTEM**

MANAGEMENT DER ANALOGEN LEISTUNG IN EINEM POWER-OVER-ETHERNET-SYSTEM

GESTION D'ENERGIE ANALOGIQUE DANS UN SYSTEME D'ALIMENTATION ELECTRIQUE PAR CABLE ETHERNET

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.11.2004 US 991409**

(43) Date of publication of application:
**01.08.2007 Bulletin 2007/31**

(73) Proprietor: **LINEAR TECHNOLOGY CORPORATION**
**Milpitas**
**California 95035-7417 (US)**

(72) Inventor: **STINEMAN, Jon Arthur, Jr.**
**Carpinteria, CA 93013 (US)**

(74) Representative: **Hill, Justin John et al**
**McDermott Will & Emery UK LLP**
**7 Bishopsgate**
**London EC2N 3AR (GB)**

(56) References cited:
**US-A1- 2004 201 931    US-A1- 2004 230 846**

• **IEEE COMPUTER SOCIETY: "802.3af Part 3: carrier Sense Multiple Access with Collision detection (CSMA/CD) Access Method and Physical Layer Specifications Amendment: Data Terminal Equipment (DTE) Pwer via Media Dependent Interface (MDI)" IEEE STD 802.3AF-2003, 18 June 2003 (2003-06-18), pages 1-121, XP002323385**

## Description

Technical Field

This disclosure relates to power supply systems, and, more particularly, to a power management mechanism and methodology in a Power over Ethernet (PoE) system.

Background Art

The IEEE 802.3af standard defines supplying power over Ethernet cabling. This Power over Ethernet (PoE) standard involves delivering power over unshielded twisted-pair wiring from Power Sourcing Equipment (PSE) to a Powered Device (PD) located at opposite sides of a link. Traditionally, network devices such as IP phones, wireless LAN access points, personal computers and Web cameras, have two required connections: one to a LAN and another to an electrical AC network. PoE eliminates the need for additional outlets and wiring to provide connection to an AC network. Instead, power is supplied over Ethernet cabling used for data transmission.

As defined in the IEEE 802.3af standard, PSE is the equipment electrically specified at the point of the physical connection to the cabling, that provides the power to a link. The PSE's main functions are to search the link for a PD requesting power, optionally classify the PD, supply power to the link if a PD is detected, monitor the power on the link, and scale power back to the detect level when power is no longer requested or required. A PSE device may provide power via one of two valid four-wire connections. In each four-wire connection, the two conductors associated with a pair each carry the same nominal current in both magnitude and polarity.

Multiple PSEs may be combined in a multi-port PSE device that supplies power to multiple links. A multi-port PSE device typically uses a single power supply to convert AC line power to the 802.3 af compliant power that can be sent over the link. Therefore, there may be a competition for power among the links powered by PSEs. To address this problem, the IEEE 802.3af standard divides PDs into 5 classes based on their maximum power consumption. PD communicates its class to the PSE before the link is powered. If the power required by the PD's advertised class is more than power available from the PSE, the PSE denies the power request. In particular, PSE must supply at least 4.0W to a link with a PD of class I connected to the link, at least 7.0W to a link with a PD of class 2, and at least 15.4W to a link with a PD of class 0, 3 or 4.

For example, if a 4-port PSE device is already powering 3 PDs of class 2, it must allocate 21 W for powering the respective 3 links. If the PSE device detects a PD on its last port, it must ensure that it has the capabilities to power that PD. For example, if a PSE device operates with a 25W power supply, it has only 4W left.

Therefore, it cannot provide power to the fourth PD of class 2. However, a PSE device with a 30W power supply can power the fourth PD of class 2 because it has 9W left.

This example shows that a multi-port PSE device must keep account of the power demands from the links to compare the power demands with the capabilities of its power supply before powering a link. Typically, a PSE device is accompanied with a microcontroller and custom software to provide its power management. However, writing the software and testing it to ensure that PSE will always comply with the 802 IEEE 802.3af standard can be a burden to PSE manufacturers. Moreover, the need for microcontroller and custom software increases the cost and complexity of PSE devices.

US 2004/0230846 provides a system for providing power over data lines, particularly Ethernet data lines, comprising a processor programmed to guarantee the supply of power to selected ports and to allow or inhibit the supply of power to ports other than selected ports.

Summary of the Disclosure

An embodiment of the invention provides a power management system for IEEE 802.3 af compliant PSE system comprising an analog bus for receiving from a first PSE controller a first signal proportional to a first amount of power demanded by a first link connected to the PSE system, and for receiving from a second PSE controller a second signal proportional to a second amount of power demanded by a second link connected to the PSE system; and a first comparator associated with the first PSE controller; in response to a power request from the first link, the first comparator comparing a total signal on the bus proportional to a total amount of power demanded from the PSE system with a predetermined value indicating a maximum power demand that can be supported by the PSE system, the first PSE controller being configured for providing power to the first link if the total signal does not exceed the predetermined value, and for denying the power request from the first link, if the total signal exceeds the predetermined value.

The subject matter disclosed herein solves these problems by providing a power management mechanism for IEEE 802.3af-compliant PSE system supplying power to multiple links. The power management mechanism comprises an analog bus shared by all PSE controllers of the PSE system. A first PSE controller supplies the bus with a first signal proportional to a first amount of power demanded by a first PoE link. A second PSE controller supplies the bus with a second signal proportional to a second amount of power demanded by a second PoE link. In response to a power request from the first link, the first PSE controller places the first signal onto the bus, and a first comparator associated with the first PSE controller compares a total signal on the bus proportional to a total amount of power demanded from the PSE system with a predetermined value indicating a maximum power demand that can be supported by the PSE system. The first PSE controller provides power to the first link if the total signal does not exceed the predetermined value. The power request from the first link is denied if the total signal exceeds the predetermined value.

In response to a power request from the second link, the second PSE controller places the second signal onto the bus, and a second comparator associated with the second PSE controller compares the total signal on the bus with the predetermined value. The second PSE controller provides power to the second link if the total signal does not exceed the predetermined value, and denies the power request from the second link if the total signal exceeds the predetermined value.

In accordance with an embodiment of the disclosure, the bus may be a single wire shared by the PSE controllers and receiving from each of the controllers the current proportional to amount of power demanded by a respective link. A resistor may be coupled to the bus for converting the current into a voltage proportional to the total power demanded from the PSE system. A voltmeter may be connected across the resistor for indicating currently available power of the PSE system.

A current source may be provided for each of the PSE controllers for producing the current supplied to the bus. A bus logic circuit may be coupled to the current source for supplying the current source with a control signal indicating power demand from the respective link.

In accordance with another aspect of the disclosure, a controller for a PoE system, comprises multiple PSE controllers for providing power to respective links, and a power management analog bus shared by the PSE controllers, and configured for receiving from each of the PSE controllers current proportional to amount of power demanded by a respective link.

A comparator associated with a PSE controller may compare a bus voltage proportional to total amount of power demanded from the system with a predetermined value indicating maximum power demand that can be supported by the controller, in order to determine whether to provide power to a respective link.

The PSE controller provides the respective link with a demanded amount of power if the bus voltage does not exceed the predetermined value, and denies a request of the respective link for power if the bus voltage exceeds the predetermined value.

In accordance with a method of the present invention, the following steps are carried out to perform power management in a PoE system:

- supplying an analog bus shared by PSE controllers of the PoE system with signals proportional to power demanded from the PSE controllers, and
- comparing a total signal on the bus proportional to total power demanded from the PSE controllers with a predetermined value indicating a maximum allowed power demand, to determine whether or not to provide power to a newly detected PD requesting power supply.

The newly detected PD is provided with the requested power if the total signal does not exceed the predetermined value. The requested power is not provided if the total signal exceeds the predetermined value.

In accordance with another aspect of the disclosure, if the total signal exceeds the predetermined value, the step of comparing is repeated after a random back-off period.

Additional advantages and aspects of the disclosure will become readily apparent to those skilled in the art from the following detailed description, wherein embodiments of the present disclosure are shown and described, simply by way of illustration of the best mode contemplated for practicing the present disclosure. As will be described, the disclosure is capable of other and different embodiments, and its several details are susceptible of modification in various obvious respects, all without departing from the spirit of the disclosure. Accordingly, the drawings and description are to be regarded as illustrative in nature, and not as limitative.

Brief Description of the Drawings

The following detailed description of the embodiments of the present disclosure can best be understood when read in conjunction with the following drawings, in which the features are not necessarily drawn to scale but rather are drawn as to best illustrate the pertinent features, wherein

FIG. 1 illustrates a power management mechanism for a multi-port PSE device of the present disclosure.

FIG. 2 illustrates operations carried out to perform power management in the multi-port PSE device of the present disclosure.

Detailed Disclosure of the Embodiments

The concepts presented herein will be described with the example of PSE controller chips for an IEEE 802.3af-compliant PoE system. It will become apparent, however, that the present concepts are applicable to managing power in any system for supplying power over a network.

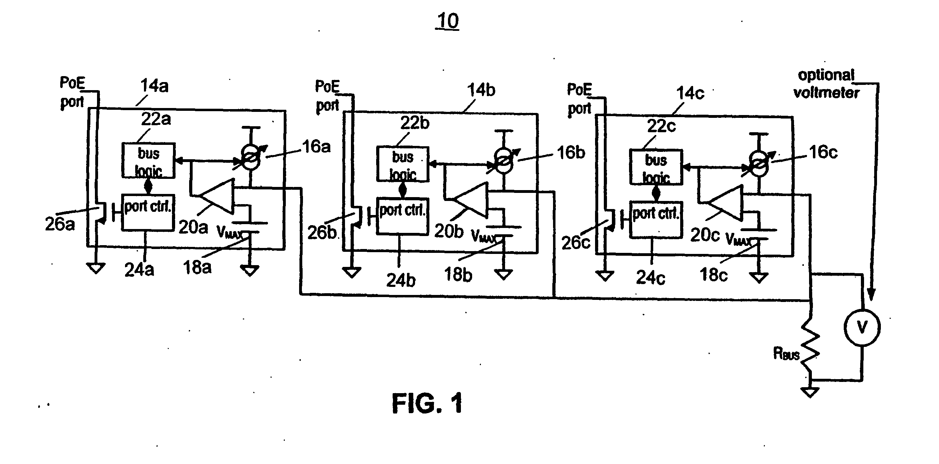

FIG. 1 illustrates a power management system provided to enable PSE controllers of a multi-port PSE device 10 to manage power supplied over IEEE 802.3af-compliant links. The power management system includes a single-wire analog bus 12 coupled to PSE controller chips 14a, 14b and 14c of the multi-port PSE device 10. Although FIG. 1 shows three PSE controller chips sharing the analog bus 12, one skilled in the art would understand that any number of PSE controller chips may be connected to the single-wire bus 12 in the multi-port PSE device 10.

Each of the PSE controller chips 14 is capable of controlling a PoE port for providing power to a PD over an IEEE 802.3af-compliant link coupled to the respective PoE port. A common power supply (not shown) may be connected to the PSE controller chips 14a, 14b and 14c for producing the 802.3 af-compliant power that can be sent over the respective links.

The power management system of the present invention further includes current sources 16a, 16b and 16c, voltage sources 18a, 18b and 18c, comparators 20a, 20b and 20c, and bus logic circuits 22a, 22b and 22c associated with PSE controller chips 14a, 14b and 14c, respectively. These elements of the power management system 10 may be built into the respective PSE controller chips. Alternatively, some or all of them may be provided externally with respect to the PSE controller chips.

The current sources 16a, 16b and 16c coupled to the bus 12 provide current supplied to the bus 12 to indicate the amount of power demanded by the links coupled to the respective PSE controller chips 14a, 14b and 14c. A resistor $R_{BUS}$ is coupled to the analog bus 12 to convert the current placed onto the bus 12 by the PSE controller chips 14a, 14b and 14c into a voltage proportional to the total power demanded from the multi-port PSE device 10.

The voltage sources 18a, 18b and 18c coupled to one input of the respective comparators 20a, 20b and 20c provide voltage $V_{MAX}$ repr esenting the maximum power demand that can be supported by the PSE device 10, i.e. the highest power that can be provided by the multi-port PSE device 10 to all links coupled to its PoE ports. Although FIG. 1 shows separate $V_{MAX}$ voltage sources for each of the PSE controller chip, one skilled in the art would understand that a single voltage source may be shared by all PSE controller chips.

The other inputs of the comparators 20a, 20b and 20c are coupled to the bus 12. The outputs of the comparators 20a, 20b and 20c via the respective bus logic circuits 22a, 22b and 22c are coupled to port control circuits 24a, 24b and 24c, respectively. Switches 26a, 26b and 26c are turned on or off by the respective port control circuits 24a, 24b and 24c to control providing power to links coupled to the PoE ports of the respective PSE controller chips 14a, 14b and 14c. As discussed in more details below, the port controllers 24 carry out operations required to detect PDs on the respective PoE links and provide power to the PDs. The bus logic circuits 22a, 22b and 22c provide conversion between bus signals and PoE link signals.

The bus 12 may be programmed to match the capabilities of a particular power supply coupled to the multi-port PSE device 10 by choosing a value for the resistor $R_{BUS}$ as follows:

$$R_{BUS} = V_{MAX} / (S_{P\text{-}to\text{-}I} \times P),$$

where $S_{P\text{-}to\text{-}I}$ is a coefficient defining the conversion from link power to bus current, and P is the power of the power supply.

The coefficient $S_{P\text{-}to\text{-}I}$ corresponds to a ratio between the current placed on the bus by PSE controllers and the power on a PoE link represented by this current. For example, if the PSE controllers place 1mkA of current to represent 1W of power demanded by PoE links, and $V_{MAX} = 1V$, then a PSE device with a 200W power supply would use $R_{BUS} = 1V/(1\mu A/W \times 200W) = 5$ kOhms.

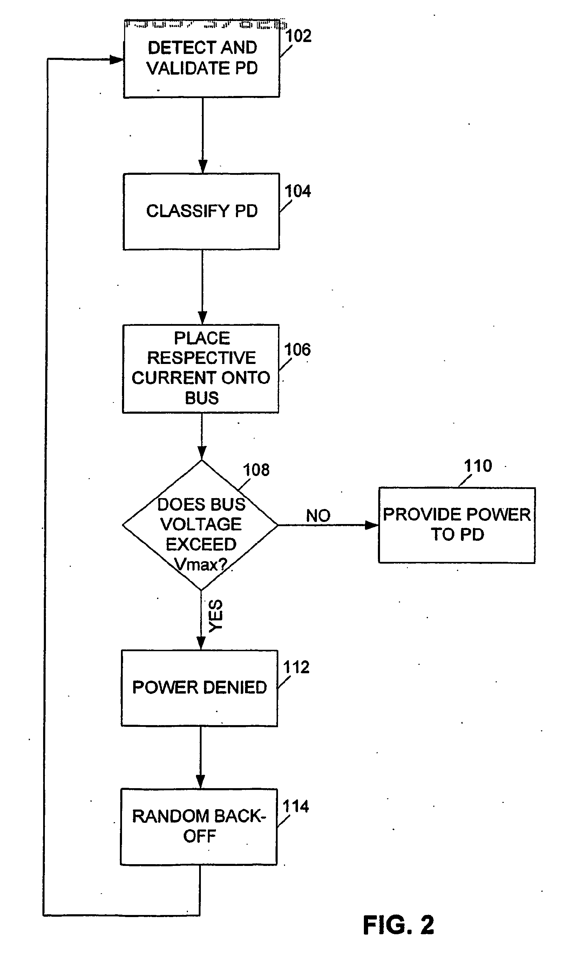

FIG. 2 is a flow chart illustrating operations of the power management system of the present invention. Each of the PSE controllers 14a, 14b and 14c periodically performs a detection procedure by probing the respective PoE link to detect a PD requesting power (step 102). If the PD is detected, the respective PSE controller 14 checks the PD detection signature to determine whether it is valid or non-valid. The valid and non-valid detection signatures are defined in the IEEE 802.3af standard. While the valid PD detection signature indicates that the PD is in a state where it will accept power via the PoE link, the non-valid PD detection signature indicates that the PD is in a state where it will not accept power.

If the signature is valid, the PSE controller 14 performs a PD classification procedure to classify the detected PD (step 104). As defined in the IEEE 802.3af standard, the classification of a PD may be carried out by applying voltage and measuring current. Based on the measured current $I_{Class}$, a PD may be classified as class 0 to class 4. A PD of class 1 demands at least 4.0W, a PD of class 2 demands at least 7.0W, and a PD of class 0, 3 or 4 demands at least 15.4W.

Based on the determined class of the PD, the port controller 24 via the respective bus control circuit 22 controls the current source 16 to produce current representing the power demand from the detected PD (step 106). This current supplied to the bus 12 is converted into a voltage by the resistor $R_{BUS}$ increasing the total bus voltage applied to one input of the respective comparator 20. The total bus voltage is compared with the voltage $V_{MAX}$ applied to another input of the comparator 20 (step 108) to determine whether the current power demand represented by the total bus voltage exceeds the maximum power demand that can be supported by the PSE device 10.

Via the bus logic 22, the output signal of the comparator 20 is supplied to the port controller 24. If the bus voltage does not exceed the voltage $V_{MAX}$, the port controller 24 concludes that the total power currently requested from the multi-port PSE device 10 by all links coupled to its PoE ports does not exceed the available power. Therefore, the port controller 24 turns on the switch 26 to provide the requested power to the detected PD via the respective PoE link (step 110).

However, if the bus voltage exceeds the voltage $V_{MAX}$, the port controller determines that the current power demand exceeds the maximum power demand supported by the PSE device 10, and denies the request for power from the detected PD (step 112).

Alternatively, the total bus voltage may be compared with the voltage $V_{MAX}$ before carrying out the step 106. If the total bus voltage does not exceed the voltage $V_{MAX}$, the current representing the power demand from the detected PD is supplied to the bus 12. If the total bus voltage exceeds the voltage $V_{MAX}$, the request for power may be denied.

If the multi-port PSE device 10 receives valid requests for power from several PoE links at the same time, it may have power sufficient for powering at least one of the requesting PDs but not sufficient to power all requesting PDs. However, due to a power request collision, all of the requests may be denied. To prevent several PSE controllers 14 from accessing the power management system at the same time, each of the PSE controllers 14a, 14b and 14c may be programmed to repeat the steps 102-108 after a random back-off period (step 114).

Further, the power management system makes it possible to determine currently available power of the PSE device 10 by measuring the voltage across the resistance $R_{BUS}$. A voltmeter may be calibrated to indicate a ratio between this voltage and the voltage representing the highest power that can be provided by the PSE device 10. This ratio represents the currently available power. Alternatively, the voltage measured across the resistance $R_{BUS}$ may be supplied via an analog-to-digital converter to a microprocessor for determining the currently available power.

The foregoing description illustrates and describes embodiments of the present invention.

The embodiments described hereinabove are further intended to explain best modes known of practicing the invention and to enable others skilled in the art to utilize the invention in such, or other, embodiments and with the various modifications required by the particular applications or uses of the invention.

**Claims**

1. A power management system for IEEE 802.3af-compliant PSE system (10), comprising:

   an analog bus (12) for receiving from a first PSE controller (14, 14a) a first signal proportional to a first amount of power demanded by a first link connected to the PSE system (10), and for receiving from a second PSE controller (14, 14a) a second signal proportional to a second amount of power demanded by a second link connected to the PSE system (10); and
   a first comparator (20) associated with the first PSE controller (14, 14a);
   in response to a power request from the first link, the first comparator (20, 20a) comparing a total signal on the bus (12) proportional to a total amount of power demanded from the PSE system (10) with a predetermined value indicating a maximum power demand that can be supported by the PSE system (10),
   the first PSE controller (14, 14a) being configured for providing power to the first link if the total signal does not exceed the predetermined value, and for denying the power request from the first link if the total signal exceeds the predetermined value.

2. The system (10) of claim 1, further comprising a second comparator (20b) associated with the second PSE controller (14b) for comparing the total signal on the bus (12) with the predetermined value when the second signal is supplied to the bus (12), the second PSE controller (14b) being configured for providing power to the second link if the total signal does not exceed the predetermined value, and for denying a request of the second link for power if the total signal exceeds the predetermined value.

3. The system (10) of claim 1, wherein the bus (12) is a single wire shared by the first and second PSE controllers (14a, 14b).

4. The system (10) of claim 1, wherein the bus (12) is configured for receiving from each of the PSE controllers (14a, 14b) current proportional to amount of power demanded by a respective link.

5. The system (10) of claim 4, wherein the bus (12) has a resistor for converting the current into a voltage.

6. The system (10) of claim 5, wherein the total signal is a voltage proportional to the total power currently demanded from the PSE system (10).

7. The system (10) of claim 6, further comprising a voltmeter connected across the resistor for displaying a value indicating currently available power.

8. The system (10) of claim 1, further comprising a current source (16, 16a, 16b, 16c), associated with each of the PSE controllers (14, 14a, 14b, 14c) for producing current supplied to the bus.

9. The system (10) of claim 8, further comprising a bus logic circuit (22, 22a) coupled to the current source (16, 16a) for supplying the current source with a control signal indicating power demand from a respective link.

10. A method of power management in a power over Ethernet system, comprising the steps of:

    supplying an analog bus (12) shared by PSE controllers (14, 14a, 14b, 14c), with signals proportional to power demanded from the PSE controllers (14, 14a, 14b, 14c), and
comparing a total signal on the bus (12) proportional to total power demanded from the PSE controllers (14, 14a, 14b, 14c) with a predetermined value indicating a maximum allowed power demand to determine whether or not to provide power to a newly detected powered device (PD) compliant with the IEEE 802.3af standard requesting power supply.

11. The method of claim 10, wherein the newly detected PD is provided with power if the total signal does not exceed the predetermined value.

12. The method of claim 10, wherein the newly detected PD is not provided with power if the total signal exceeds the predetermined value.

13. The method of claim 12, wherein the step of comparing is repeated after a random back-off period if the total signal exceeds the predetermined value.

**Patentansprüche**

1. Energiemanagementsystem für ein mit IEEE 802.3af kompatibles PSE-System (10), umfassend:

einen Analogbus (12) zum von einem ersten PSE-Controller (14, 14a) her erfolgenden Empfangen eines ersten Signals, das proportional zu einer ersten Menge von Energie ist, die von einem mit dem PSE-System (10) verbundenen ersten Link nachgefragt wird, und zum von einem zweiten PSE-Controller (14, 14a) her erfolgenden Empfangen eines zweiten Signals, das proportional zu einer zweiten Menge von Energie ist, die von einem mit dem PSE-System (10) verbundenen zweiten Link nachgefragt wird; und
einen ersten Komparator (20), der dem ersten PSE-Controller (14, 14a) zugeordnet ist;
wobei in Reaktion auf eine Energieanforderung von dem ersten Link der erste Komparator (20, 20a) ein Gesamtsignal auf dem Bus (12), das proportional zu einer Gesamtmenge von Energie ist, die von dem PSE-System (10) nachgefragt wird, mit einem vorbestimmten Wert vergleicht, der eine maximale Energienachfrage angibt, die von dem PSE-System (10) unterstützt werden kann,
wobei der erste PSE-Kontroller (14, 14a) dafür ausgelegt ist, Energie für den ersten Link bereitzustellen, wenn das Gesamtsignal den vorbestimmten Wert nicht überschreitet, und die Energieanforderung von dem ersten Link zurückzuweisen, wenn das Gesamtsignal den vorbestimmten Wert überschreitet.

2. System (10) nach Anspruch 1, des Weiteren umfassend einen dem zweiten PSE-Kontroller (14b) zugeordneten zweiten Komparator (20b) zum Vergleichen des Gesamtsignals auf dem Bus (12) mit dem vorbestimmten Wert, wenn das zweite Signal dem Bus (12) zugeführt wird, wobei der zweite PSE-Kontroller (14b) dafür ausgelegt ist, Energie für den zweiten Link bereitzustellen, wenn das Gesamtsignal den vorbestimmten Wert nicht überschreitet, und eine Energieanforderung des zweiten Links zurückzuweisen, wenn das Gesamtsignal den vorbestimmten Wert überschreitet.

3. System (10) nach Anspruch 1, wobei der Bus (12) ein einzelner Draht ist, der von den ersten und zweiten PSE-Kontrollern (14a, 14b) gemeinsam benutzt wird.

4. System (10) nach Anspruch 1, wobei der Bus (12) dafür ausgelegt ist, von jedem der PSE-Kontroller (14a, 14b) Strom zu empfangen, der proportional zur Menge der von einem jeweiligen Link nachgefragten Energie ist.

5. System (10) nach Anspruch 4, wobei der Bus (12) einen Widerstand zum Umwandeln des Stroms in eine Spannung aufweist.

6. System (10) nach Anspruch 5, wobei das Gesamtsignal eine Spannung ist, die proportional zur Gesamtenergie ist, die aktuell von dem PSE-System (10) nachgefragt wird.

7. System (10) nach Anspruch 6, des Weiteren umfassend ein über den Widerstand angeschossene Voltmeter zum Anzeigen eines Wertes, der die aktuell verfügbare Energie angibt.

8. System (10) nach Anspruch 1, des Weiteren umfassend eine jedem der PSE-Kontroller (14, 14a, 14b, 14c) zugeordnete Stromquelle (16, 16a, 16b, 16c) zum Erzeugen von Strom, der dem Bus zugeführt wird.

9. System (10) nach Anspruch 8, des Weiteren umfassend eine mit der Stromquelle (16, 16a) gekoppelte Buslogikschaltung (22, 22a) zum Versorgen der Stromquelle mit einem Steuer- bzw. Regelsignal; das die Energienachfrage von einem jeweiligen Link angibt.

10. Verfahren zum Energiemanagement in einem Energie-über-Ethernet-System (Power over Ethernet), umfassend die nachfolgenden Schritte:

Versorgen eines von PSE-Kontrollern (14, 14a, 14b, 14c) gemeinsam benutzten Analogbusses (12) mit Signalen, die proportional zu Energie sind, die von den PSE-Kontrollern (14, 14a, 14b, 14c) nachgefragt wird, und

Vergleichen eines Gesamtsignals auf dem Bus (12), das proportional zur Gesamtenergie ist, die von den PSE-Kontrollern (14, 14a, 14b, 14c) nachgefragt wird, mit einem vorbestimmten Wert, der eine maximal zulässige Energienachfrage angibt, um zu bestimmen, ob Energie für eine mit IEEE 802.3af kompatible, neu erfasste energiebetriebene Vorrichtung (Powered Device PD), die eine Energieversorgung anfordert, bereitgestellt werden kann.

**11.** Verfahren nach Anspruch 10, wobei die neu erfasste energiebetriebene Vorrichtung PD mit Energie versorgt wird, wenn das Gesamtsignal den vorbestimmten Wert nicht überschreitet.

**12.** Verfahren nach Anspruch 10, wobei die neu erfasste energiebetriebene Vorrichtung PD nicht mit Energie versorgt wird, wenn das Gesamtsignal den vorbestimmten Wert überschreitet.

**13.** Verfahren nach Anspruch 12, wobei der Schritt des Vergleichens nach einer beliebigen Back-off-Zeitspanne wiederholt wird, wenn das Gesamtsignal den vorbestimmten Wert überschreitet.

## Revendications

**1.** Système de gestion d'énergie pour un système PSE (10) conforme à IEEE 802.3af comprenant :

un bus analogique (12) pour recevoir d'un premier contrôleur PSE (14, 14a) un premier signal proportionnel à une première quantité d'énergie demandée par une première liaison connectée au système PSE (10) et pour recevoir d'un second contrôleur PSE (14, 14b) un second signal proportionnel à une seconde quantité d'énergie demandée par une seconde liaison connectée au système PSE (10) ; et
un premier comparateur (20) associé au premier contrôleur PSE (14, 14a) ;
en réponse à une demande d'énergie en provenance de la première liaison, le premier comparateur (20, 20a) compare un signal total sur le bus (12) proportionnel à une quantité d'énergie totale demandée depuis le système PSE (10) avec une valeur prédéterminée indiquant une demande d'énergie maximale qui peut être supportée par le système PSE (10), le premier contrôleur PSE (14, 14a) étant configuré pour fournir de l'énergie à la première liaison si le signal total ne dépasse pas la valeur prédéterminée, et pour refuser la demande d'énergie en provenance de la première liaison si le signal total dépasse la valeur prédéterminée.

**2.** Système (10) selon la revendication 1, comprenant en outre un second comparateur (20b) associé au second contrôleur PSE (14b) pour comparer le signal total sur le bus (12) avec la valeur prédéterminée lorsque le second signal est fourni au bus (12), le second contrôleur PSE (14b) étant configuré pour fournir de l'énergie à la seconde liaison si le signal total ne dépasse pas la valeur prédéterminée, et pour refuser une demande d'énergie de la seconde liaison si le signal total dépasse la valeur prédéterminée.

**3.** Système (10) selon la revendication 1, dans lequel le bus (12) est un seul fil partagé par les premier et second contrôleurs PSE (14a, 14b).

**4.** Système (10) selon la revendication 1, dans lequel le bus (12) est configuré pour recevoir de chacun des contrôleurs PSE (14a, 14b) un courant proportionnel à la quantité d'énergie demandée par une liaison respective.

**5.** Système (10) selon la revendication 4, dans lequel le bus (12) a une résistance pour convertir le courant en une tension.

**6.** Système (10) selon la revendication 5, dans lequel le signal total est une tension proportionnelle à l'énergie totale actuellement demandée depuis le système PSE (10).

**7.** Système (10) selon la revendication 6, comprenant en outre un voltmètre connecté aux bornes de la résistance pour afficher une valeur indiquant l'énergie actuellement disponible.

**8.** Système (10) selon la revendication 1, comprenant en outre une source de courant (16, 16a, 16b, 16c) associée à chacun des contrôleurs PSE (14, 14a, 14b, 14c) pour produire le courant fourni au bus.

**9.** Système (10) selon la revendication 8, comprenant en outre un circuit logique de bus (22, 22a) couplé à la source de courant (16, 16a) pour fournir à la source de courant un signal de commande indiquant la demande d'énergie en provenance d'une liaison respective.

**10.** Procédé de gestion d'énergie dans un système d'alimentation par Ethernet, comprenant les étapes consistant à :

fournir à un bus analogique (12) partagé par des contrôleurs PSE (14, 14a, 14b, 14c) des signaux proportionnels à l'énergie demandée depuis les contrôleurs PSE (14, 14a, 14b, 14c) et comparer un signal total sur le bus (12) proportionnel à l'énergie totale demandée depuis les contrôleurs PSE (14, 14a, 14b, 14c) avec une valeur prédéterminée indiquant une demande d'énergie maximale autorisée afin de déterminer de fournir ou non de l'énergie à un dispositif alimenté (PD) nouvellement détecté conforme à la norme IEEE 802.3af demandant l'alimentation.

**11.** Procédé selon la revendication 10, dans lequel de l'énergie est fournie au PD nouvellement détecté si le signal total ne dépasse pas la valeur prédéterminée.

**12.** Procédé selon la revendication 10, dans lequel de l'énergie n'est pas fournie au PD nouvellement détecté si le signal total dépasse la valeur prédéterminée.

**13.** Procédé selon la revendication 12, dans lequel l'étape de comparaison est répétée après une période de réduction de puissance aléatoire si le signal total dépasse la valeur prédéterminée.

<u>10</u>

optional voltmeter

PoE port

14a 22a bus logic 16a 20a V_MAX port ctrl. 24a 18a 26a

PoE port

14b 22b bus logic 16b 20b V_MAX port ctrl. 24b 18b 26b

PoE port

14c 22c bus logic 16c 20c V_MAX port ctrl. 24c 18c 26c

V R_BUS

**FIG. 1**

DETECT AND
VALIDATE PD ⌐102

↓

CLASSIFY PD ⌐104

↓

PLACE
RESPECTIVE
CURRENT ONTO
BUS ⌐106

↓

DOES BUS
VOLTAGE
EXCEED
Vmax? ⌐108

NO → PROVIDE POWER
TO PD ⌐110

YES

↓

POWER DENIED ⌐112

↓

RANDOM BACK-
OFF ⌐114

**FIG. 2**

10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040230846 A